# EUROPÄISCHE PATENTSCHRIFT

(11) **EP 3 281 511 B1**
(45) Veröffentlichungstag und Bekanntmachung des Hinweises auf die Patenterteilung: **10.04.2019**
(21) Anmeldenummer: 17181668.9
(22) Anmeldetag: 17.07.2017
(51) Int. Cl.: A01D 43/08

(54) **FAHRBARE MÄHVORRICHTUNG**
MOBILE MOWING DEVICE
TONDEUSE AUTO-TRACTÉE

(30) Priorität: 09.08.2016 AT 507272016
(43) Veröffentlichungstag der Anmeldung: 14.02.2018
(73) Patentinhaber: Steininger, Werner, 4722 Peuerbach (AT)
(72) Erfinder: Steininger, Werner, 4722 Peuerbach (AT)
(74) Vertreter: KLIMENT & HENHAPEL

(56) Entgegenhaltungen:
- WO-A2-2004/002210
- DE-A1- 2 552 083
- DE-A1- 2 639 519
- DE-A1- 3 308 077

## Beschreibung

Die Erfindung bezieht sich auf eine fahrbare Mähvorrichtung mit einem Mähwerk und einem Antrieb für das Mähwerk, gemäß dem Oberbegriff von Anspruch 1. Eine gattungsgemäße Mähvorrichtung ist aus der WO 2004/002210 A2 bekannt.

Mähvorrichtungen für Mähgut sind in unterschiedlicher Ausführung bekannt, etwa aus der DE 2639 519 A1, die eine gattungsgemäße Vorrichtung zeigt, oder der DE 33 08 077 A1. Zumeist wird das Mähgut von bodennah geführten Schneidelementen geschnitten und entweder am Boden abgelegt oder einem mitgeführten Sammelbehälter zugeführt. Bei vielen Anwendungen wird gewünscht, dass das Mähgut nicht bloß abgelegt wird, sondern aus dem Mähbereich entfernt wird. Das trifft beispielsweise auf Überschwemmungsdämme oder Dämme von Entlastungsbecken zu, auf denen das Mähgut nicht liegen bleiben sollte, da es ansonsten von den nächsten Wasserbewegungen mitgeschwemmt werden würde. Im Allgemeinen wirkt liegen gelassenes Mähgut aber auch als Dünger für nachwachsendes Mähgut, der somit für ungewünschtes, rascheres Wachstum sorgt.

Das geschnittene Mähgut könnte freilich einem mitgeführten Sammelbehälter zugeführt und entsorgt werden. Gegen eine solche Vorgangsweise gibt es zunehmend Bedenken wegen der im Mähgut enthaltenen Organismen, die für den lokalen Lebensraum mitunter als wichtig erachtet werden. Aus diesen Überlegungen sollte das Mähgut für gewisse Zeit am Boden liegen gelassen werden, um diese Organismen zu schonen und ihnen das Verlassen des Mähguts zu ermöglichen. Vor allem kommunale Flächenerhalter sind zunehmend mit solchen Anforderungen konfrontiert.

Zudem sollte die Grasnarbe während des Mähvorganges nicht verletzt werden, sodass die Flächenlast gering gehalten werden muss. Die Mähvorrichtungen müssen daher entsprechend leicht ausgeführt sein. Eine leichte und kompakte Ausführung ist vor allem auch für den oben erwähnten Einsatz auf Überschwemmungsdämmen oder Dämmen von Entlastungsbecken vorteilhaft, wo mitunter starke Hangneigungen bearbeitet werden müssen.

Es ist daher das Ziel der Erfindung eine Mähvorrichtung bereitzustellen, die klein und kompakt und vergleichsweise kostengünstig gebaut werden kann und auch bei schwierigem Terrain mit starkem und mitunter auch feuchtem Bewuchs einsetzbar ist, wobei das Mähgut aus dem Mähbereich entfernt aber nicht unmittelbar gesammelt wird.

Dieses Ziel wird durch die Merkmale von Anspruch 1 erreicht. Anspruch 1 bezieht sich auf eine fahrbare Mähvorrichtung mit einem Mähwerk und einem Antrieb für das Mähwerk, das als Mähbalken mit zumindest zwei entlang des Mähbalkens angeordnete und jeweils um eine vertikale Drehachse drehbare Mähscheiben ausgeführt ist, wobei von den zumindest zwei Mähscheiben zwei unmittelbar nebeneinander liegende Mähscheiben mit zueinander gegensinniger Drehrichtung angetrieben sind, die im Bereich ihrer geringsten Beabstandung einen Sammelbereich für das Mähgut bilden, und oberhalb des Mähbalkens eine Abdeckung vorgesehen ist, auf der ein nach oben führendes Auswurfrohr für das Mähgut angeordnet ist. Erfindungsgemäß wird vorgeschlagen, dass das nach oben führende Auswurfrohr mit einem Wurfgebläse versehen ist, das ein Schaufelrad aufweist, dessen Wurfschaufeln sich bis in den zwischen Abdeckung und Mähbalken gebildeten Sammelbereich erstrecken.

Das Mähwerk wird zunächst als Mähbalken mit Mähscheiben ausgeführt, die jeweils um eine vertikale Drehachse drehbar angeordnet sind. Das geschnittene Mähgut wird dabei von den Mähscheiben in Umlaufrichtung der Mähscheiben mitbewegt. Da erfindungsgemäß zwei nebeneinander liegende Mähscheiben vorgesehen sind, die gegensinnig rotieren, wird das Mähgut einem gemeinsamen Sammelbereich zugeführt. Dieser Sammelbereich ist der Bereich der geringsten Beabstandung der beiden nebeneinander liegenden Mähscheiben. Diesen Sammelbereich durchlaufen die Wurfschaufeln des Schaufelrades des Wurfgebläses. Ein Wurfgebläse ist ein mechanisch und pneumatisch wirkendes Fördergebläse, das über ein Schaufelrad und ein zum Schaufelrad konzentrisch angeordnetes Gehäuse verfügt. Das Mähgut wird von den Wurfschaufeln des Schaufelrades auf deren Umfangsgeschwindigkeit beschleunigt und somit durch das Auswurfrohr ausgeworfen. Das Schaufelrad wird daher auch als Beschleunigerrad bezeichnet. Ein gewisser Luftstrom wirkt dabei unterstützend. Die Auswurfhöhe ist dabei auf etwa 15 Meter begrenzt, sie reicht aber aus um das geschnittene Mähgut vom Mähbereich entfernt abzulagern, sodass es den weiteren Mähvorgang nicht mehr beeinträchtigen kann. Auch ein Verstopfen oder Verlegen des Mähwerks kann somit unterbunden werden.

Für den Antrieb des Wurfgebläses wird vorzugsweise vorgeschlagen, dass derselbe Antrieb für die Mähscheiben des Mähbalkens und für das Wurfgebläse vorgesehen ist. Der Antrieb ist dabei vorzugsweise oberhalb der Abdeckung angeordnet und über eine Gebläsewelle mit dem Wurfgebläse sowie über ein Umlenkgetriebe mit den Mähscheiben des Mähbalkens verbunden. Die Abdeckung erzeugt einerseits die Voraussetzungen für das Sammeln und Auswerfen des geschnittenen Mähgutes durch das Wurfgebläse, und stellt andererseits einen Schutz des Antriebes gegenüber Verschmutzungen dar. Das Drehmoment des Antriebes wird über ein Umlenkgetriebe auf die unterhalb des Antriebes angeordneten Mähscheiben übertragen. Die Verteilung des Drehmoments auf die einzelnen entlang des Mähbalkens angeordneten Mähscheiben kann über Zahnrad- oder Riemengetriebe und dergleichen erfolgen.

Des Weiteren wird vorgeschlagen, dass die in Fahrtrichtung vorderste Kante der Abdeckung in Fahrtrichtung vor dem vordersten Umfangsbereich der Mähscheiben liegt. Auf diese Weise gerät das zu schneidende Mähwerk zunächst in Kontakt mit der vordersten Kante der Abdeckung und wird daher vorgebogen, bevor es in Kontakt mit den Mähklingen der Mähscheiben tritt. Dieses Umbiegen des Mähguts verbessert den anschließenden Schneidvorgang und den anschließenden Transport des geschnittenen Mähguts durch die Mähscheiben zum Sammelbereich.

Vorzugsweise wird die fahrbare Mähvorrichtung gemäß der Erfindung als Teil eines selbstfahrenden Mähfahrzeuges ausgebildet sein, das somit klein und kompakt gebaut werden kann und dadurch auch auf schwierigem Terrain eingesetzt werden kann, wobei es entweder Platz für einen Fahrer bietet, oder als ferngesteuertes Fahrzeug ausgebildet sein kann. Die fahrbare Mähvorrichtung könnte aber auch so ausgebildet sein, dass sie nicht selbstfahrend ist und stattdessen an ein anderes Fahrzeug angekoppelt werden kann, um von ihm gezogen oder geschoben zu werden.

Die Erfindung wird in weiterer Folge anhand eines Ausführungsbeispiels mithilfe der beiliegenden Zeichnungen näher erläutert. Es zeigen hierbei die
Fig. 1 eine perspektivische Ansicht einer Ausführungsform eines Mähfahrzeuges mit einer erfindungsgemäßen Mähvorrichtung, und die
Fig. 2 eine weitere perspektivische Ansicht der Ausführungsform gemäß Fig. 1.

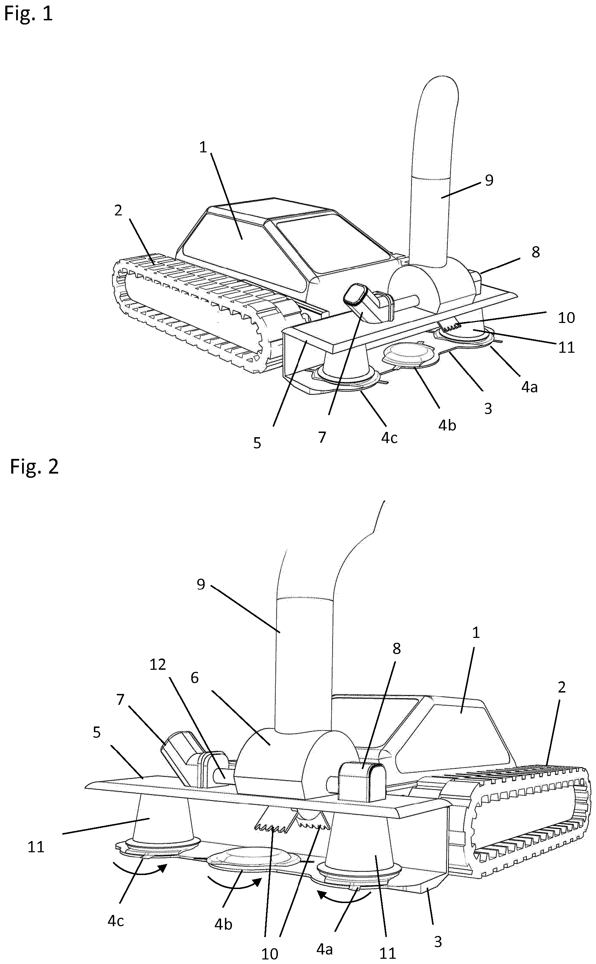

Die Fig. 1 und 2 zeigen ein Mähfahrzeug mit einer Fahrerkabine 1 und einem raupenartigen Fahrantrieb 2. Im vorderen Bereich des Mähfahrzeuges ist eine erfindungsgemäße Mähvorrichtung mit einem Mähbalken 3 angeordnet, der im gezeigten Ausführungsbeispiel drei entlang des Mähbalkens 3 drehbar angeordnete Mähscheiben 4a, 4b, 4c aufweist. Oberhalb des Mähbalkens 3 befindet sich eine Abdeckung 5. An einem Durchbruch der Abdeckung 5 ist ein Wurfgebläse 6 mit einem Schaufelrad angeordnet, dessen Wurfschaufeln 10 sich bis unterhalb des Durchbruches der Abdeckung 5 und bis in einen Sammelbereich für das geschnittene Mähgut erstrecken.

Das Wurfgebläse 6 ist über eine Gebläsewelle 12 einerseits mit einem Antrieb 7 und andererseits mit einem Umlenkgetriebe 8 verbunden. Das Umlenkgetriebe 8 leitet das Drehmoment von der Gebläsewelle des Antriebes 7 zum Mähbalken 3, wo es auf die Mähscheiben 4a, 4b, 4c verteilt wird. Hierbei sind die unterhalb der Abdeckung 5 befindlichen Teile des Umlenkgetriebes 8 von einem kegelstumpfförmigen Gehäuse 11 abgedeckt, um es vor Verschmutzung zu sichern. Das Gehäuse 11 verbindet ferner den Mähbalken 3 mit der Abdeckung 5 und erhöht somit die strukturelle Stabilität der Anordnung. Ein weiteres Gehäuse 11 befindet sich auch am gegenüberliegenden Ende des Mähbalkens 3, das das Lager der äußersten Mähscheibe 4c beinhaltet. Das Wurfgebläse 6 ist ferner mit einem nach oben führenden Auswurfrohr 9 verbunden.

Die Mähscheiben 4a, 4b, 4c sind jeweils um eine vertikale Drehachse drehbar angeordnet. Das geschnittene Mähgut wird dabei von den Mähscheiben 4a, 4b, 4c in Umlaufrichtung der jeweiligen Mähscheibe 4a, 4b, 4c mitbewegt. Von den drei Mähscheiben 4a, 4b, 4c bewegen sich zwei unmittelbar nebeneinander liegende Mähscheiben 4a, 4b in gegensinniger Umlaufrichtung, wie in der Fig. 2 mithilfe der Pfeile angedeutet wird. Die äußerste Mähscheibe 4c bewegt sich in dieselbe Richtung wie die mittige Mähscheibe 4b. Das geschnittene Mähgut wird daher von der äußersten Mähscheibe 4c zur mittigen Mähscheibe 4b und von dort in Richtung der ersten Mähscheibe 4a transportiert. Die erste Mähscheibe 4a transportiert das geschnittene Mähgut wiederum in Richtung der mittigen Mähscheibe 4b. Das Mähgut wird daher in einem Bereich der geringsten Beabstandung der beiden nebeneinander liegenden Mähscheiben 4a, 4b zusammen geführt. Dieser Bereich wird daher auch als Sammelbereich bezeichnet. Dieser Sammelbereich wird von den Wurfschaufeln 10 des Wurfgebläses 6 durchlaufen.

Das Mähgut wird somit mithilfe der Wurfschaufeln 10 des Wurfgebläses 6 und des Auswurfrohres 9 aus dem Mähbereich entfernt und in größerer Entfernung ausgeworfen, sodass es den weiteren Mähvorgang nicht mehr beeinträchtigen kann. Ein Verstopfen oder Verlegen des Mähwerks kann somit unterbunden werden. Für das Wurfgebläse 6 und die Mähscheiben 4a, 4b, 4c des Mähbalkens 3 wird zudem derselbe Antrieb 7 verwendet, der oberhalb der Abdeckung 5 für den Mähbalken 3 angeordnet ist. Die Abdeckung 5 erzeugt wie erwähnt einerseits die Voraussetzungen für ein Sammeln und Abführen des Mähgutes durch das Wurfgebläse 6 und stellt andererseits einen Schutz des Antriebes 7 gegenüber Verschmutzungen dar.

Die erfindungsgemäße Mähvorrichtung kann somit klein und kompakt und vergleichsweise kostengünstig gebaut werden, und ist auch bei schwierigem Terrain mit starkem und mitunter auch feuchtem Bewuchs einsetzbar.

## Patentansprüche

1. Fahrbare Mähvorrichtung mit einem Mähwerk für Mähgut und einem Antrieb (7) für das Mähwerk, das als Mähbalken (3) mit zumindest zwei entlang des Mähbalkens (3) angeordnete und jeweils um eine vertikale Drehachse drehbare Mähscheiben (4a, 4b, 4c) ausgeführt ist, wobei von den zumindest zwei Mähscheiben (4a, 4b, 4c) zwei unmittelbar nebeneinander liegende Mähscheiben (4a, 4b, 4c) mit zueinander gegensinniger Drehrichtung angetrieben sind, die im Bereich ihrer geringsten Beabstandung einen Sammelbereich für das Mähgut bilden, und oberhalb des Mähbalkens (3) eine Abdeckung (5) vorgesehen ist, auf der ein nach oben führendes Auswurfrohr (9) für das Mähgut angeordnet ist, **dadurch gekennzeichnet, dass** das nach oben führende Auswurfrohr (9) mit einem Wurfgebläse (6) versehen ist, das ein Schaufelrad aufweist, dessen Wurfschaufeln (10) sich bis in den zwischen Abdeckung (5) und Mähbalken (3) gebildeten Sammelbereich erstrecken.

2. Fahrbare Mähvorrichtung nach Anspruch 1, **dadurch gekennzeichnet, dass** derselbe Antrieb (7) für die Mähscheiben (4a, 4b, 4c) des Mähbalkens (3) und für das Wurfgebläse (6) vorgesehen ist.

3. Fahrbare Mähvorrichtung nach Anspruch 2, **dadurch gekennzeichnet, dass** der Antrieb (7) oberhalb der Abdeckung (5) angeordnet ist und über eine Gebläsewelle (12) mit dem Wurfgebläse (6) sowie über ein Umlenkgetriebe (8) mit den Mähscheiben (4a, 4b, 4c) des Mähbalkens (3) verbunden ist.

4. Fahrbare Mähvorrichtung nach einem der Ansprüche 1 bis 3, **dadurch gekennzeichnet, dass** die in Fahrtrichtung vorderste Kante der Abdeckung (5) in Fahrtrichtung vor dem vordersten Umfangsbereich der Mähscheiben (4a, 4b, 4c) liegt.

5. Mähfahrzeug mit einer fahrbaren Mähvorrichtung nach einem der Ansprüche 1 bis 4.

## Claims

1. A mobile mowing device comprising a mower for cut material and a drive (7) for the mower, which is designed as a cutter bar (3) having at least two cutter discs (4a, 4b, 4c) arranged along the cutter bar (3) and each rotatable about a vertical axis of rotation, wherein, of the at least two cutter discs (4a, 4b, 4c), two directly adjacent cutter discs (4a, 4b, 4c) are driven in opposite directions of rotation from one another and, in the region of the shortest distance therebetween, form a collecting region for the cut material, and above the cutter bar (3) there is provided a cover (5), on which there is arranged an upwardly guiding ejection pipe (9) for the cut material, **characterised in that** the upwardly guiding ejection pipe (9) is provided with a throw-out blower (6), which has a paddle wheel, the throwing paddles (10) of which extend into the collecting region formed between the cover (5) and cutter bar (3) .

2. The mobile mowing device according to claim 1, **characterised in that** the same drive (7) is provided for the cutter discs (4a, 4b, 4c) of the cutter bar (3) and for the throw-out blower (6).

3. The mobile mowing device according to claim 2, **characterised in that** the drive (7) is arranged above the cover (5) and is connected via a blower shaft (12) to the throw-out blower (6) and via a redirecting gear (8) to the cutter discs (4a, 4b, 4c) of the cutter bar (3).

4. The mobile mowing device according to any one of claims 1 to 3, **characterised in that** the edge of the cover (5) arranged frontmost in the direction of travel lies in front of the foremost peripheral region of the cutter discs (4a, 4b, 4c).

5. A mowing vehicle having a mobile mowing device according to any one of claims 1 to 4.

## Revendications

1. Dispositif de fauchage mobile avec un mécanisme de fauchage pour de la matière à faucher et un entraînement (7) pour le mécanisme de fauchage, conçu comme une barre de fauchage (3) avec au moins deux disques de fauchage (4a, 4b, 4c) disposés le long de la barre de fauchage (3) et capables de rotation chacun autour d'un axe de rotation vertical, dans lequel deux des au moins deux disques de fauchage (4a, 4b, 4c) sont des disques de fauchage (4a, 4b, 4c) disposés immédiatement l'un à côté de l'autre et tournant dans des sens opposés, qui forment une zone de groupage de la matière à faucher au niveau de leur plus petit écartement, et il est prévu au-dessus de la barre de fauchage (3) un capotage (5) sur lequel est disposé un tuyau d'éjection (9) menant vers le haut pour la matière à faucher, **caractérisé en ce que** le tuyau d'éjection (9) menant vers le haut est muni d'une soufflerie d'éjection (6) qui présente une roue à aubes dont les pales d'éjection (10) s'étendent jusqu'à la zone de groupage formée entre le capotage (5) et la barre de fauchage (3).

2. Dispositif de fauchage mobile selon la revendication 1, **caractérisé en ce que** le même entraînement (7) est prévu pour les disques de fauchage (4a, 4b, 4c) de la barre de fauchage (3) et pour la soufflerie d'éjection (6).

3. Dispositif de fauchage mobile selon la revendication 2, **caractérisé en ce que** l'entraînement (7) est disposé au-dessus du capotage (5) et relié par un arbre de soufflerie (12) à la soufflerie d'éjection (6) et par un engrenage de renvoi (8) aux disques de fauchage (4a, 4b, 4c) de la barre de fauchage (3).

4. Dispositif de fauchage mobile selon l'une des revendications 1 à 3, **caractérisé en ce que** le bord du capotage (5) situé le plus en avant dans le sens de la marche se trouve, dans le sens de la marche, devant la région de circonférence des disques de fauchage (4a, 4b, 4c) située le plus en avant.

5. Véhicule de fauchage muni d'un dispositif de fauchage mobile selon l'une des revendications 1 à 4.
